# EUROPEAN PATENT SPECIFICATION

(11) **EP 3 189 933 B1**
(45) Date of publication and mention of the grant of the patent: **29.08.2018**
(21) Application number: 16206057.8
(22) Date of filing: 22.12.2016
(51) Int. Cl.: B23Q 17/24, G01B 21/04, G01B 11/00, G01B 5/00

(54) **METHODS AND APPARATUS FOR ENABLING DETERMINATION OF A POSITION OF AN OBJECT**
VERFAHREN UND VORRICHTUNG ZUR AKTIVIERUNG DER BESTIMMUNG EINER POSITION EINES OBJEKTS
PROCÉDÉS ET APPAREIL PERMETTANT DE DÉTERMINER UNE POSITION D'UN OBJET

(30) Priority: 11.01.2016 GB 201600434
(43) Date of publication of application: 12.07.2017
(73) Proprietor: Rolls-Royce plc, London SW1E 6AT (GB)
(72) Inventor: Huckerby, Karl, Derby, Derbyshire DE24 8BJ (GB); Sower, Martin, Derby, Derbyshire DE24 8BJ (GB)
(74) Representative: Rolls-Royce plc

(56) References cited:
- DE-A1-102014 012 203
- GB-A- 2 505 496
- US-A1- 2003 079 360
- US-B2- 7 414 732

## Description

### TECHNOLOGICAL FIELD

The present disclosure concerns methods and apparatus for enabling determination of a position of an object.

### BACKGROUND

Objects, such as components of gas turbine engines, may not have optimal dimensions subsequent to manufacturing (for example, the size and/or shape of the object may not be optimal for performance). Additionally, such objects may become worn and/or deformed during operation and may have dimensions that are no longer optimal. Consequently, such objects may require material addition and/or removal at one or more locations on their surfaces.

For example, when repairing a bladed disk (which may also be referred to as a blisk), a damaged aerofoil may be removed and a replacement aerofoil may be built up or welded in place. The replacement aerofoil may require machining to blend the new material of the aerofoil into the old material of the disk. Such machining usually involves removing material from the aerofoil to close tolerances that are required to meet the aerodynamic performance of the aerofoil.

Currently, an object may be measured at a measuring station to determine the dimensions of the object. Once measured, the object is usually transferred to a fixture and clamped to the fixture to provide the rigidity required for processing (either material addition or removal). However, it is usually necessary to calibrate the object to the material addition/removal tool so that processing may be accurately carried out. Such calibration may be relatively time consuming and labour intensive.

D1 (DE102014012203) relates to an apparatus for determining the 3D coordinates of the surface of an object. The apparatus comprises a measuring table, reference marks, a tracking system having a camera bar in which a plurality of cameras are arranged, and a measuring device and a plurality of detectors, which are detectable by the tracking system. The measuring table and the camera beam are arranged in a collapsible container.

D2 (GB2505496) relates to a fixture that has a foot clamp for clamping a foot of an aerofoil, and a tip clamp for clamping a tip of the aerofoil. The fixture is also provided with an array of supports between the foot clamp and the tip clamp. Each support within the array is independently addressable to a flank of the aerofoil when the aerofoil is secured to the fixture. The tip clamp may have a protrusion which engages with a surplus of material at the tip of the aerofoil. The supports may be pins driven by pneumatics or hydraulics. Each support may have a locking device to lock the support against the aerofoil flank. At least three alignment pillars may be located beyond the array of supports, each having an exposed reference surface. The aerofoil may be a fan, compressor or turbine blade or vane, or an aircraft wing or aileron. When secured by the fixture the aerofoil may be machined.

### BRIEF SUMMARY

According to various examples, there is provided apparatus as claimed in claim 1.

The first connector may be located on a second surface of the body. The second surface of the body may be different to the first surface of the body.

The first surface of the body may be inclined at an angle relative to the second surface of the body.

The apparatus may further comprise a fixture for retaining the object. The fixture may comprise a second connector configured to connect to the first connector of the baseplate.

The first connector of the baseplate and the second connector of the fixture may provide a zero point mounting system.

The apparatus may further comprise a reference frame comprising a plurality of second reference marks. The reference frame and the fixture may be configured to magnetically couple to one another.

The sensor may be configured to obtain a second image of at least a subset of the second reference marks and a subset of the first reference marks; and the controller may be configured to determine a second distance between the subset of the imaged first reference marks and the subset of the imaged second reference marks using the second image.

The controller may be configured to determine a position of the object relative to the second connector using the determined second distance.

The apparatus may further comprise a tool comprising a third connector configured to connect to the second connector of the fixture.

The tool may comprise a machine tool configured to remove material from the object.

According to various examples, there is provided a method as claimed in claim 10.

The method may further comprise: connecting an elongate member to the first connector of the baseplate; and wherein determining the first distance may comprise determining a distance between the elongate member and the subset of the first reference marks.

The method may further comprise: providing a fixture for retaining the object. The fixture may comprise a second connector configured to connect to the first connector of the baseplate. The method may further comprise connecting the second connector of the fixture to the first connector of the baseplate.

The method may further comprise: providing a reference frame comprising a plurality of second reference marks; and magnetically coupling the reference frame and the fixture to one another.

The method may further comprise: obtaining a second image of at least a subset of the second reference marks and at least a subset of the first reference marks; and determining a second distance between the subset of the imaged first reference marks and the subset of the imaged second reference marks using the second image.

The method may further comprise: determining a third distance between the subset of the second reference marks and the second connector of the fixture using the determined first distance and the determined second distance; and determining a position of the object relative to the second connector of the fixture using the determined third distance.

The method may further comprise: providing a tool comprising a third connector configured to connect to the second connector of the fixture; and connecting the second connector of the fixture to the third connector of the tool; removing the reference frame from the fixture; and controlling operation of the tool using the determined position of the object.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of apparatus for enabling determination of position of an object according to various examples;
Fig. 2 illustrates a perspective view of a baseplate according to various examples;
Fig. 3 illustrates a flow diagram of a method of determining position of an object according to various examples; and
Fig. 4 illustrates a perspective view of apparatus for enabling determination of position of an object according to various examples.

### DETAILED DESCRIPTION

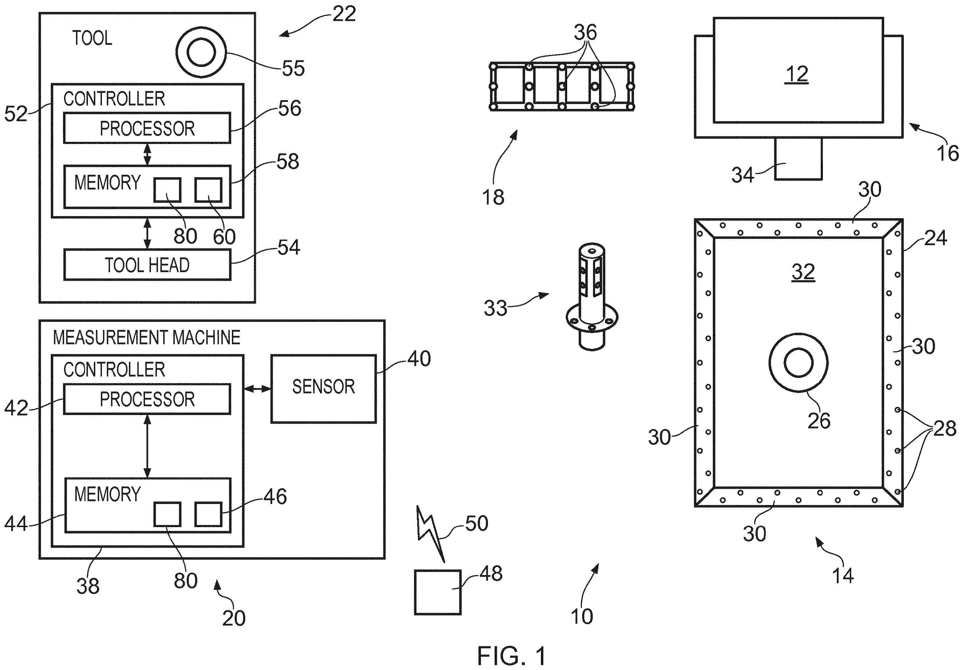

Fig. 1 illustrates a schematic diagram of an apparatus 10 for enabling determination of position of an object 12 according to various examples. The apparatus 10 includes a baseplate 14, a fixture 16, one or more reference frames 18, a measurement machine 20, and a tool 22. In some examples, the apparatus 10 may be a module. As used herein, the wording 'module' refers to a device or apparatus where one or more features are included at a later time, and possibly, by another manufacturer or by an end user. For example, where the apparatus 10 is a module, the apparatus 10 may only include the baseplate 14, and the remaining features (namely, the fixture 16, the one or more reference frames 18, the measurement machine 20, and the tool 22) may be added by another manufacturer, or by an end user.

The object 12 may be any object that is to be measured to enable material addition and/or removal to be performed on the object 12. For example, the object 12 may be a component of a gas turbine engine such as a fan blade, a compressor blade, a turbine blade, a bladed disk (blisk) or a bladed ring (bling).

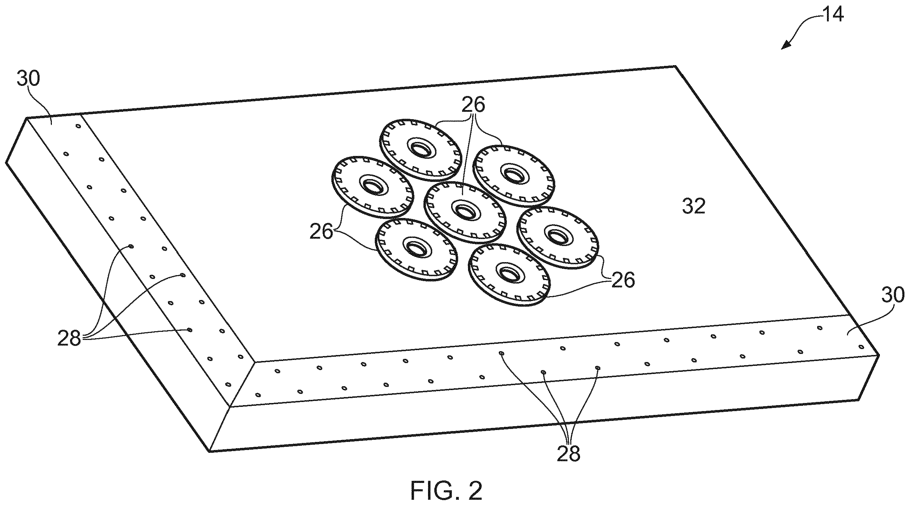

The baseplate 14 is configured to support the fixture 16 and includes a body 24, a first connector 26 and a plurality of first reference marks 28. The body 24 may have any suitable size and shape, and may comprise any suitable materials. For example, the body 24 may have a planar rectangular shape (as illustrated in Figs. 1 and 2) and may comprise a metallic material such as steel. The body 24 defines a first surface 30 and a second surface 32. The first surface 30 extends around the second surface 32 and forms a bevelled edge (that is, the first surface 30 is inclined at an angle relative to the second surface 32).

The first connector 26 may be any suitable connector and may be a socket (such as a zero point adaptor for example) for receiving a connector pin. The first connector 26 is located on the second surface 32 of the body 24. In some examples, the baseplate 14 may comprise a plurality of first connectors 26 that are located on the second surface 32 as illustrated in Fig. 2.

The plurality of first reference marks 28 are distributed on at least the first surface 30 of the body 24. The plurality of first reference marks 28 may be distributed on the whole of the first surface 30 or may only be distributed on one or more portions of the first surface 30 (for example, the first reference marks 28 may only be distributed on the long edges of the body 24). In some examples, the plurality of first reference marks 28 may be distributed on the same surface as the first connector 26 (that is, the plurality of first reference marks 28 may be distributed on the second surface 32). The first reference marks 28 may have any suitable shape and may comprise circular dots. At least some of the first reference marks 28 may comprise a protrusion (such as a hubbs adaptor) that extends out of the first surface 30 of the body 24. Where the first reference marks 28 comprise a protrusion, the first reference marks 28 may be sensed by a contact probe of a coordinate measuring machine.

In some examples, the apparatus 10 may comprise an elongate member 33 having a plurality of reference marks thereon. The elongate member 33 is configured to be received within the first connector 26 of the baseplate 14. Where the baseplate 14 includes a plurality of first connectors 26, the apparatus 10 may comprise a plurality of elongate members 33 (for example, the apparatus 10 may comprise one elongate member 33 per first connector 26 of the baseplate 14).

The fixture 16 is configured to retain the object 12. For example, the fixture 16 may comprise one or more clamps for securely holding the object 12 in position. The fixture 16 includes a second connector 34 that is configured to connect to the first connector 26 of the baseplate 14. For example, the second connector 34 may comprise an elongate protrusion (such as a connector pin) that is sized and shaped to fit securely within a socket of the first connector 26. In some examples, the fixture 16 may comprise a plurality of second connectors 34 (for example, the fixture 16 may comprise a plurality of connector pins 34 for connecting to the plurality of sockets 26 illustrated in Fig. 2). The first connector 26 of the baseplate 14 and the second connector 34 of the fixture 16 may provide a zero point mounting system.

The reference frame 18 may have any suitable size, shape and structure. For example, the reference frame 18 illustrated in Fig. 1 is rectangular and has a grid structure defining a plurality of apertures there through. The reference frame 18 includes a plurality of second reference marks 36 that are distributed across the surface of the reference frame 18. Where the apparatus 10 includes a plurality of reference frames 18, the reference frames 18 may be of different sizes, shapes and structures. Alternatively, the plurality of reference frames 18 may have the same size, shape and structure as one another.

The plurality of second reference marks 36 may be distributed on the whole of the reference frame 18 or may only be distributed on one or more portions of the reference frame 18 (for example, the second reference marks 36 may only be distributed on a subset of the grid structure illustrated in Fig. 1). The second reference marks 36 may have any suitable shape and may be circular dots in various examples.

The reference frame 18 and the fixture 16 are configured to magnetically couple to one another. For example, the fixture 16 and/or the reference frame 18 may comprise a magnetic material that enables the fixture 16 and the reference frame 18 to magnetically couple to one another.

The measurement machine 20 is configured to measure the relative positions of the baseplate 14, the fixture 16, the one or more reference frames 18 and the object 12 to enable the tool 22 to accurately process the object 12. For example, the measurement machine 20 may be a photogrammetric device. The measurement machine 20 comprises a controller 38 and a sensor 40 and may comprise, for example, a three dimensional (3D) scanner or a coordinate measuring machine (CMM). The controller 38 and the sensor 40 may be coupled to one another via a wireless link and may consequently comprise transceiver circuitry and one or more antennas. Additionally or alternatively, the controller 38 and the sensor 40 may be coupled to one another via a wired link and may consequently comprise interface circuitry (such as a Universal Serial Bus (USB) socket).

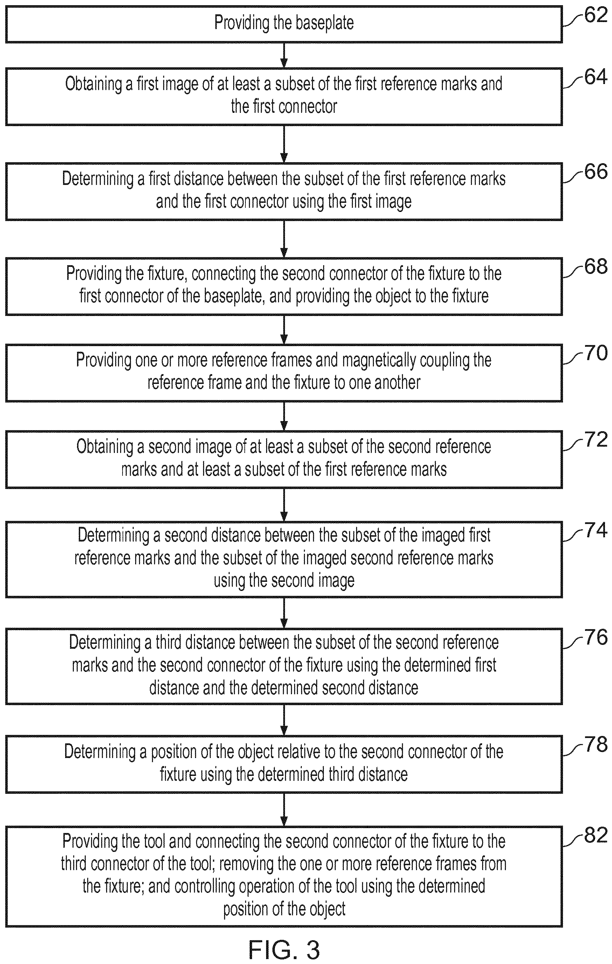

The controller 38 may comprise any suitable circuitry to cause performance of at least some blocks of the methods described herein and as illustrated in Fig. 3. The controller 38 may comprise: at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 38 may comprise at least one processor 42 and at least one memory 44. The memory 44 stores a computer program 46 comprising computer readable instructions that, when read by the processor 42, causes performance of at least some blocks of the methods described herein, and as illustrated in Fig. 3. The computer program 46 may be software or firmware, or may be a combination of software and firmware.

The processor 42 may include at least one microprocessor and may comprise a single core processor, may comprise multiple processor cores (such as a dual core processor or a quad core processor), or may comprise a plurality of processors (at least one of which may comprise multiple processor cores). The memory 44 may be any suitable non-transitory computer readable storage medium, data storage device or devices, and may comprise a hard disk and/or solid state memory (such as flash memory). The memory 44 may be permanent non-removable memory, or may be removable memory (such as a universal serial bus (USB) flash drive or a secure digital card).

The computer program 46 may be stored on a non-transitory computer readable storage medium 48. The computer program 46 may be transferred from the non-transitory computer readable storage medium 48 to the memory 44. The non-transitory computer readable storage medium 48 may be, for example, a USB flash drive, a secure digital (SD) card, an optical disc (such as a compact disc (CD), a digital versatile disc (DVD) or a Blu-ray disc). In some examples, the computer program 46 may be transferred to the memory 44 via a signal 50 such as a wireless signal or via a wired signal.

The sensor 40 may comprise any suitable circuitry that is configured to sense the relative positions of the baseplate 14, the fixture 16, the one or more reference frames 18 and the object 12. For example, the sensor 40 may comprise one or more cameras (such as a charge coupled device (CCD) camera or a complementary metal oxide semiconductor (CMOS) camera) that are configured to obtain images. In other examples, the sensor 40 may comprise a photodetector that is configured to detect x-rays that are incident on the sensor 40. In such examples, the sensor 40 may additionally comprise a source that is configured to emit x-rays.

The controller 38 is configured to control the operation of the sensor 40. For example, the controller 38 may be configured to control the operation of a camera 40 to obtain images. The controller 38 is also configured to receive data from the sensor 40. For example, the controller 38 may receive a plurality of images of the baseplate 14 from the sensor 40.

The tool 22 may comprise any machine or device that is configured to remove material from the object 12. For example, the tool 22 may comprise a milling machine, a grinding machine, a cutting machine, a linishing tool or an electrical discharge machining (EDM) apparatus. Alternatively or additionally, the tool 22 may comprise any machine or device that is configured to add material to the object 12. For example, the tool 22 may comprise a welding machine.

The tool 22 comprises a controller 52, a tool head 54 and a third connector 55. The controller 52 is configured to control the operation of the tool 22 and may have a similar structure to the controller 38 of the measurement machine 20. As illustrated in Fig. 1, the controller 52 may include at least one processor 56 and at least one memory 58. The memory 58 stores a computer program 60 comprising computer readable instructions that, when read by the processor 56, causes performance of at least some blocks of the methods described herein, and as illustrated in Fig. 3. The computer program 60 may be software or firmware, or may be a combination of software and firmware.

The third connector 55 is configured to connect to the second connector 34 of the fixture 16. For example, where the second connector 34 includes a connector pin, the third connector 55 may comprise a socket that is configured to receive the connector pin 34 therein. The second connector 34 and the third connector 55 may form a zero point mounting system.

The operation of the apparatus 10 is described in the following paragraphs with reference to Fig. 3.

Fig. 3 illustrates a flow diagram of a method of determining a position of the object 12 according to various examples.

At block 62, the method includes providing the baseplate 14. For example, the baseplate 14 may be provided by an operator on a table within a measurement laboratory.

At block 64, the method includes obtaining a first image of at least a subset of the first reference marks 28 and the first connector 26. For example, the controller 38 may control the sensor 40 to obtain the first image of the baseplate 14 that includes at least some of the first reference marks 28 and the first connector 26. In some examples, block 64 may first include inserting the elongate member 33 within the first connector 26 and then obtaining the first image including the elongate member 33 and at least some of the first reference marks 28.

At block 66, the method includes determining a first distance between the subset of the first reference marks 28 and the first connector 26 using the first image. For example, the controller 38 may use any suitable photogrammetry algorithm or algorithms to determine a first distance between the subset of the first reference marks 28 and the first connector 26. In various examples, block 66 may include determining a plurality of first distances between the different first reference marks 28 and the first connector 26.

At block 68, the method includes: providing the fixture 16; connecting the second connector 34 of the fixture 16 to the first connector 26 of the baseplate 14; and providing the object 12 to the fixture 16. For example, an operator or a robotic arm may connect the second connector 34 to the first connector 26 and then insert the object 12 within the fixture 16. Where the baseplate 14 includes a plurality of first connectors 26 and the fixture 16 includes a plurality of second connectors 34, block 68 includes connecting the plurality of second connectors 34 to the plurality of first connectors 26. In some examples, the fixture 16 and the object 12 may be sprayed with an anti-reflective pain at block 68.

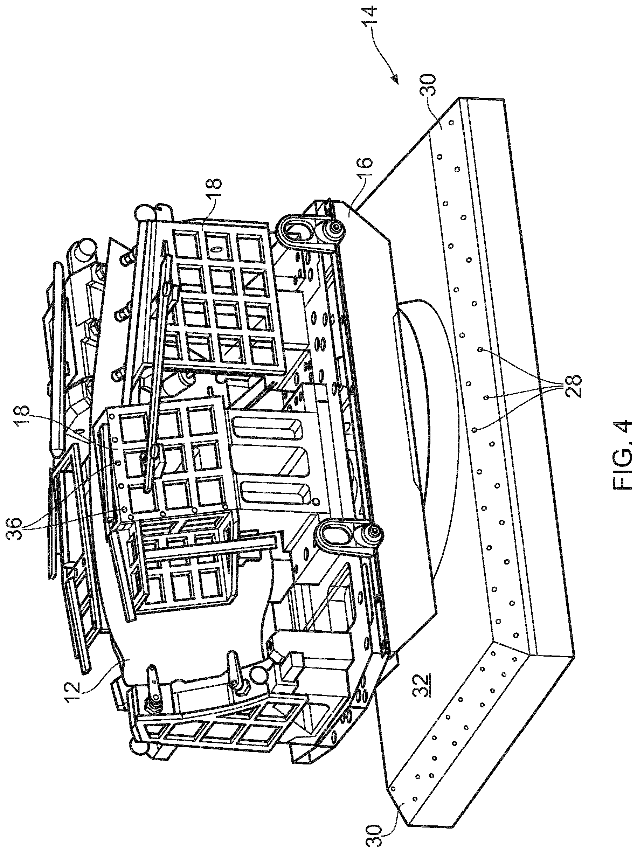

At block 70, the method includes providing the one or more reference frames 18 and magnetically coupling the one or more reference frames 18 and the fixture 16 to one another. For example, an operator or a robotic arm may magnetically attach one or more of the reference frames 18 to the fixture 16. Fig. 4 illustrates a perspective view of an apparatus 10 whereby the second connector 34 of the fixture 16 is connected to the first connector 26 of the baseplate 14. A fan blade 12 is retained by the fixture 16 and a plurality of the reference frames 18 are magnetically attached to the fixture 16.

At block 72, the method includes obtaining a second image of at least a subset of the second reference marks 36, at least a subset of the first reference marks 28, and the object 12. For example, the controller 38 may control the sensor 40 to obtain the second image of one or more of the reference frames 18 and the baseplate 14.

At block 74, the method includes determining a second distance between the subset of the imaged first reference marks 28 and the subset of the imaged second reference marks 36 using the second image. For example, the controller 38 may use any suitable photogrammetry algorithm or algorithms to determine a second distance between the subset of the first reference marks 28 and the subset of the imaged second reference marks 36. In various examples, block 74 may include determining a plurality of second distances between the first and second reference marks 28, 36.

At block 76, the method includes determining a third distance between the subset of the second reference marks 36 and the second connector 34 of the fixture 16 using the determined first distance and the determined second distance. For example, the controller 38 may use a photogrammetry algorithm to determine the third distance using the determined first and second distances. It should be appreciated that block 76 may include determining a plurality of third distances between a number of different second reference marks 36 and the second connector 34.

At block 78, the method includes determining a position of the object 12 relative to the second connector 34 using the third distance determined at block 76 and positional information of the object 12 in the second image obtained at block 72. For example, the controller 38 may determine the position of one or more locations on one or more surfaces of the object 12 relative to the second connector 34 using one or more of the determined third distances and the positional information of the object 12. The controller 38 may control storage of the determined one or more positions of the object 12 in the memory 58 as data 80.

At block 82, the method includes providing the tool 22 and connecting the second connector 34 of the fixture 16 to the third connector 55 of the tool 22. Block 82 also includes removing the one or more reference frames 18 from the fixture 16 and controlling operation of the tool 22 using the determined one or more positions of the object 12 to add or remove material from the object 12. For example, data 80 may be transferred from the memory 44 of the measurement machine 20 to the memory 52 of the tool 22 via a non-transitory computer readable storage medium (such as the storage medium 48) or via a signal (such as the signal 50). The controller 52 may use the data 80 to generate a tooling path (for example, a machining path and/or a path for adding material) and then use the tooling path to control the tooling head 54 to add material to, and/or remove material from the object 12.

In some examples, the data 80 may be provided from the measurement machine 20 to a computer that is configured to align the tooling path and the positional data 80 to one another. The computer may also be configured to adapt the tooling path using the positional data 80 so that certain features on the object 12 may be processed. The aligned and adapted tooling path may then be provided to the controller 52 of the tool 22 so that the object 12 may be processed.

It should be appreciated that the first, second and third distances mentioned above may be vectors having both a direction and magnitude. For example, the first distances may include the direction from the first connector 26 to one or more first reference marks 28 and the magnitude of the distance. In some examples, the first, second and third distances may be expressed as coordinates (Cartesian coordinates for example). For example, the third distances and the positions of the surfaces of the object 12 may be expressed as coordinates where the second connector 34 is the origin.

The apparatus 10 and the methods described above may provide several advantages. First, the position of the object 12 relative to the second connector 34 may be determined relatively quickly using photogrammetry since at least some of the first and second reference marks 28, 36 may be viewed in a single image and it may not be necessary to use contact measurement to measure the distance between the second reference marks 36 and the second connector 34. Second, the fixture 16 may be used as both the fixture for the measurement machine 20 and for the tool 22 and no further calibration may be necessary when the object 12 is transferred to the tool 22. Third, the reference frames 18 may be relatively easily removed from the fixture 16 after photogrammetry has been performed so that the tool 22 may carry out a process on the object 12 (and thus enabling the fixture 16 to be used for both measurement and material addition and/or removal). Where the fixture 16 and the object 12 are sprayed with an anti-reflective paint at block 68, the coupling of the reference frames 18 to the fixture 16 may be advantageously unaffected by the wet surfaces of the fixture 16 since the reference frames 18 magnetically couple to the fixture 16.

It will be understood that the invention is not limited to the embodiments above-described and various modifications and improvements can be made without departing from the concepts described herein. For example, in some embodiments, the apparatus 10 may not comprise the one or more reference frames 18 and in such embodiments, the third distance between the object 12 and the second connector 34 of the fixture 16 may be determined using the determined positions of the first reference marks 28, the first connector 26 and the object 12.

Except where mutually exclusive, any of the features may be employed separately or in combination with any other features and the disclosure extends to and includes all combinations and sub-combinations of one or more features described herein.

## Claims

1. Apparatus (10) for enabling determination of position of an object (12), the apparatus comprising:
a baseplate (14) configured to support a fixture (16) for retaining the object (12), the base plate (14) comprising: a body (24) comprising: a first connector (26) configured to connect to a second connector (34) of the fixture (16); and a plurality of first reference marks (28) distributed on at least a first surface (30) of the body (24); and
a sensor (40) configured to obtain a first image of at least a subset of the first reference marks (28) and the first connector (26); and a controller (38) configured to determine a first distance between the subset of the first reference marks (28) and the first connector (26) using the first image.

2. Apparatus as claimed in claim 1, wherein the first connector (26) is located on a second surface (32) of the body (24), the second surface (32) of the body (24) being different to the first surface (30) of the body (24).

3. Apparatus as claimed in claim 2, wherein the first surface (30) of the body (24) is inclined at an angle relative to the second surface (32) of the body (24).

4. Apparatus as claimed in any of the preceding claims, further comprising a fixture (16) for retaining the object (12), the fixture (16) comprising a second connector (34) configured to connect to the first connector (26) of the baseplate (14).

5. Apparatus as claimed in claim 4, wherein the first connector (26) of the baseplate (14) and the second connector (34) of the fixture (16) provide a zero point mounting system.

6. Apparatus as claimed in claim 4 or 5, further comprising a reference frame (18) comprising a plurality of second reference marks (36), the reference frame (18) and the fixture (16) being configured to magnetically couple to one another.

7. Apparatus as claimed in claim 6, wherein the sensor (40) is configured to obtain a second image of at least a subset of the second reference marks (36) and a subset of the first reference marks (28); and the controller (38) is configured to determine a second distance between the subset of the imaged first reference marks and the subset of the imaged second reference marks using the second image.

8. Apparatus as claimed in claim 7, wherein the controller (38) is configured to determine a position of the object (12) relative to the second connector (34) using the determined second distance.

9. Apparatus as claimed in any of the preceding claims, further comprising a tool (22) comprising a third connector (55) configured to connect to the second connector (34) of the fixture (16).

10. A method of enabling determination of a position of an object (12), the method comprising:
providing a baseplate (14) configured to support a fixture (16) for retaining the object (12), the base plate (14) comprising: a body (24) comprising a first connector (26) configured to connect to a second connector (34) of the fixture (16); and a plurality of first reference marks (28) distributed on at least a first surface (30) of the body (24);
obtaining a first image of at least a subset of the first reference marks (28) and the first connector (26); and
determining a first distance between the subset of the first reference marks (28) and the first connector (26) using the first image.

11. A method as claimed in claim 10, further comprising: connecting an elongate member (33) to the first connector (26) of the baseplate (14); and wherein determining the first distance comprises determining a distance between the elongate member (33) and the subset of the first reference marks (28).

12. A method as claimed in claim 10 or 11, further comprising:
providing a fixture (16) for retaining the object (12), the fixture (16) comprising a second connector (34) configured to connect to the first connector (26) of the baseplate (14); and
connecting the second connector (34) of the fixture (16) to the first connector (26) of the baseplate (14).

13. A method as claimed in claim 12, further comprising:
providing a reference frame (18) comprising a plurality of second reference marks (36); and
magnetically coupling the reference frame (18) and the fixture (16) to one another.

## Patentansprüche

1. Vorrichtung (10), um eine Positionsbestimmung eines Objekts (12) zu ermöglichen, wobei die Vorrichtung folgendes umfasst:
eine Grundplatte (14), die so gestaltet ist, dass sie eine Einrichtung (16) zum Halten des Objekts (12) trägt, wobei die Grundplatte (14) folgendes umfasst: einen Körper (24), umfassend: einen ersten Verbinder (26), der für eine Verbindung mit einem zweiten Verbinder (34) der Einrichtung (16) gestaltet ist; und wobei eine Mehrzahl erster Bezugsmarken (28) auf wenigstens einer ersten Oberfläche (30) des Körpers (24) verteilt ist; und
einen Sensor (40), der so gestaltet ist, dass er ein erstes Bild wenigstens einer Teilmenge der ersten Bezugsmarken (28) und des ersten Verbinders (26) erhält; und eine Steuereinheit (38), die so gestaltet ist, dass sie einen ersten Abstand zwischen der Teilmenge der ersten Bezugsmarken (28) und dem ersten Verbinder (26) unter Verbindung des ersten Bilds bestimmt.

2. Vorrichtung nach Anspruch 1, wobei der erste Verbinder (26) auf einer zweiten Oberfläche (32) des Körpers (24) angeordnet ist, wobei sich die zweite Oberfläche (32) des Körpers (24) von der ersten Oberfläche (30) des Körpers (24) unterscheidet.

3. Vorrichtung nach Anspruch 2, wobei die erste Oberfläche (30) des Körpers (24) in einem Winkel zu der zweiten Oberfläche (32) des Körpers (24) geneigt ist.

4. Vorrichtung nach einem der vorstehenden Ansprüche, ferner umfassend eine Einrichtung (16) zum Halten des Objekts (12), wobei die Einrichtung (16) einen zweiten Verbinder (34) umfasst, der für eine Verbindung mit dem ersten Verbinder (26) der Grundplatte (14) gestaltet ist.

5. Vorrichtung nach Anspruch 4, wobei der erste Verbinder (26) der Grundplatte (14) und der zweite Verbinder (34) der Einrichtung (16) ein Nullpunktspannsystem bereitstellen.

6. Vorrichtung nach Anspruch 4 oder 5, ferner umfassend einen Bezugsrahmen (18), der eine Mehrzahl zweiter Bezugsmarken (36) umfasst, wobei der Bezugsrahmen (18) und die Einrichtung (16) für eine magnetische Kopplung aneinander gestaltet sind.

7. Vorrichtung nach Anspruch 6, wobei der Sensor (40) so gestaltet ist, dass er ein zweites Bild wenigstens einer Teilmenge der zweiten Bezugsmarken (36) und einer Teilmenge der ersten Bezugsmarken (28) erhält; und wobei die Steuereinheit (38) so gestaltet ist, dass sie einen zweiten Abstand zwischen der Teilmenge der abgebildeten ersten Bezugsmarken und der Teilmenge der abgebildeten zweiten Bezugsmarken unter Verwendung des zweiten Bilds bestimmt.

8. Vorrichtung nach Anspruch 7, wobei die Steuereinheit (38) gestaltet ist, um eine Position des Objekts (12) im Verhältnis zu dem zweiten Verbinder (34) unter Verwendung des bestimmten zweiten Abstands zu bestimmen.

9. Vorrichtung nach einem der vorstehenden Ansprüche, ferner umfassend ein Werkzeug (22), das einen dritten Verbinder (55) umfasst, der für eine Verbindung mit dem zweiten Verbinder (34) der Einrichtung (16) gestaltet ist.

10. Verfahren zur Ermöglichung einer Positionsbestimmung eines Objekts (12), wobei das Verfahren folgendes umfasst:
Bereitstellen einer Grundplatte (14), die so gestaltet ist, dass sie eine Einrichtung (16) zum Halten des Objekts (12) trägt, wobei die Grundplatte (14) folgendes umfasst: einen Körper (24), umfassend: einen ersten Verbinder (26), der für eine Verbindung mit einem zweiten Verbinder (34) der Einrichtung (16) gestaltet ist; und wobei eine Mehrzahl erster Bezugsmarken (28) auf wenigstens einer ersten Oberfläche (30) des Körpers (24) verteilt ist; und
Erhalten eines erstes Bilds wenigstens einer Teilmenge der ersten Bezugsmarken (28) und des ersten Verbinders (26);
Bestimmen eines ersten Abstands zwischen der Teilmenge der ersten Bezugsmarken (28) und dem ersten Verbinder (26) unter Verbindung des ersten Bilds.

11. Verfahren nach Anspruch 10, ferner umfassend: Verbinden eines elongierten Elements (33) mit dem ersten Verbinder (26) der Grundplatte (14); und wobei das Bestimmen des ersten Abstands das Bestimmen eines Abstands zwischen dem elongierten Element (33) und der Teilmenge der ersten Bezugsmarken (28) umfasst.

12. Verfahren nach Anspruch 10 oder 11, ferner umfassend:
Bereitstellen einer Einrichtung (16) zum Halten des Objekts (12), wobei die Einrichtung (16) einen zweiten Verbinder (34) umfasst, der für eine Verbindung mit dem ersten Verbinder (26) der Grundplatte (14) gestaltet ist; und
Verbinden des zweiten Verbinders (34) der Einrichtung (16) mit dem ersten Verbinder (26) der Grundplatte (14).

13. Verfahren nach Anspruch 12, ferner umfassend:
Bereitstellen eines Bezugsrahmens (18), der eine Mehrzahl zweiter Bezugsrahmen (36) umfasst; und
magnetisches Koppeln des Bezugsrahmens (18) und der Einrichtung (16) miteinander.

## Revendications

1. Appareil (10) permettant de déterminer la position d'un objet (12), l'appareil comprenant :
une plaque de base (14) conçue pour supporter une fixation (16) pour retenir l'objet (12), la plaque de base (14) comprenant : un corps (24) comprenant : un premier raccord (26) conçu pour se raccorder à un second raccord (34) de la fixation (16) ; et une pluralité de premières marques de référence (28) réparties sur au moins une première surface (30) du corps (24) ; et
un capteur (40) conçu pour obtenir une première image d'au moins un sous-ensemble des premières marques de référence (28) et du premier raccord (26) ; et un dispositif de commande (38) conçu pour déterminer une première distance entre le sous-ensemble des premières marques de référence (28) et le premier raccord (26) à l'aide de la première image.

2. Appareil selon la revendication 1, le premier raccord (26) étant situé sur une seconde surface (32) du corps (24), la seconde surface (32) du corps (24) étant différente de la première surface (30) du corps (24).

3. Appareil selon la revendication 2, la première surface (30) du corps (24) étant inclinée à un angle par rapport à la seconde surface (32) du corps (24).

4. Appareil selon l'une quelconque des revendications précédentes, comprenant en outre une fixation (16) pour retenir l'objet (12), la fixation (16) comprenant un second raccord (34) conçu pour se raccorder au premier raccord (26) de la plaque de base (14).

5. Appareil selon la revendication 4, le premier raccord (26) de la plaque de base (14) et le second raccord (34) de la fixation (16) fournissant un système de montage à point zéro.

6. Appareil selon la revendication 4 ou 5, comprenant en outre un cadre de référence (18) comprenant une pluralité de secondes marques de référence (36), le cadre de référence (18) et la fixation (16) étant conçus pour se coupler magnétiquement l'un à l'autre.

7. Appareil selon la revendication 6, le capteur (40) étant conçu pour obtenir une seconde image d'au moins un sous-ensemble des secondes marques de référence (36) et un sous-ensemble des premières marques de référence (28) ; et le dispositif de commande (38) étant conçu pour déterminer une seconde distance entre le sous-ensemble des premières marques de référence imagées et le sous-ensemble des secondes marques de référence imagées à l'aide de la seconde image.

8. Appareil selon la revendication 7, le dispositif de commande (38) étant conçu pour déterminer une position de l'objet (12) par rapport au second raccord (34) à l'aide de la seconde distance déterminée.

9. Appareil selon l'une quelconque des revendications précédentes, comprenant en outre un outil (22) comprenant un troisième raccord (55) conçu pour se raccorder au second raccord (34) de la fixation (16).

10. Procédé permettant de déterminer une position d'un objet (12), le procédé comprenant les étapes consistant à :
fournir une plaque de base (14) conçue pour supporter une fixation (16) pour retenir l'objet (12), la plaque de base (14) comprenant : un corps (24) comprenant : un premier raccord (26) conçu pour se raccorder à un second raccord (34) de la fixation (16) ; et une pluralité de premières marques de référence (28) réparties sur au moins une première surface (30) du corps (24) ;
obtenir une première image d'au moins un sous-ensemble des premières marques de référence (28) et du premier raccord (26) ; et
déterminer une première distance entre le sous-ensemble des premières marques de référence (28) et le premier raccord (26) à l'aide de la première image.

11. Procédé selon la revendication 10, comprenant en outre les étapes consistant à :
raccorder un élément allongé (33) au premier raccord (26) de la plaque de base (14) ; et la détermination de la première distance comprenant l'étape consistant à déterminer une distance entre l'élément allongé (33) et le sous-ensemble des premières marques de référence (28).

12. Procédé selon la revendication 10 ou 11, comprenant en outre les étapes consistant à :
fournir une fixation (16) pour retenir l'objet (12), la fixation (16) comprenant un second raccord (34) conçu pour se raccorder au premier raccord (26) de la plaque de base (14) ; et
raccorder le second raccord (34) de la fixation (16) au premier raccord (26) de la plaque de base (14).

13. Procédé selon la revendication 12, comprenant en outre les étapes consistant à :
fournir un cadre de référence (18) comprenant une pluralité de secondes marques de référence (36) ; et
accoupler magnétiquement le cadre de référence (18) et la fixation (16) l'un à l'autre.
